# EUROPEAN PATENT APPLICATION

(11) **EP 2 466 454 A1**
(43) Date of publication of application: **20.06.2012**
(21) Application number: 10015552.2
(22) Date of filing: 11.12.2010
(51) Int. Cl.: G06F 9/44, G06F 9/445

(54) **Configuration update method of the installed base**

(71) Applicant: ABB Technology AG, 8050 Zurich (CH)
(72) Inventor: Stich, Christian M., 69493 Hirschberg-Leutershausen (DE); Dix, Marcel, 68167 Mannheim (DE); Maczey, Sylvia, 69493 Hirschberg (DE); Aleksy, Markus, 67071 Ludwigshafen (DE)
(74) Representative: Partner, Lothar

(57) **Abstract**

The invention proposes a configuration update method of the installed base with a Main-CMDB (2) at a Service-Provider-Site (1),
• whereby the Main-CMDB (2) includes all file versions, package-versions, configuration-versions and Customized-Configuration-Versions for different customers entered by the service provider, or by external project engineers or system integrators,
• whereby each file version, package version and configuration version in the database has a link to its predecessor file version, package version or configuration version,
• whereby all those Package developers, project engineers or system integrators are automatically informed when a new file, package or configuration is entered in the Main-CMDB (2), that used the predecessor of that new file, package or configuration, so that they can build new packages or configurations themselves based on the new data in the Main-CMDB (2),
• whereby a Service-Engineer (14) gets an Extract (G) of the Main-CMDB (2) for a specific customer, which Extract (G) is stored in a Transport-Medium (14),in case a direct connection to the Main-CMDB (2) is not possible,
• whereby an Update-Tool (12) is used to check the Customer-CMDB-Extract (8) or the Main-CMDB (2), if connection is possible, for possible updates for software,
• whereby the information about the executed updates is saved in the Customer-CMDB-Extract (8), or the Main-CMDB (2), if connection is possible,
• whereby the Customized-Configurations are stored in the Transport-Medium (14) for entering to the Main-CMDB (2), if connection to Main-CMDB is not possible.

## Description

The invention relates to a configuration update method of the installed base.

Considering embedded systems such as controller systems or any kind of real-time systems, which are installed at customer's side world-wide, it is a challenge to know exactly the installed configuration and types of devices. Equipments configuration changes over time, after installation, customer and service are updating and modifying the installed software. The operating system, but also the customer-tailored application, is affected. After a period of time, like a decade, it is during a service event a challenge for the service engineer to identify the installed software. In a re-active service event, the service engineer could be confronted with devices, which he had never maintained before. If a problem has to be solved rapidly, all required configuration information, suchlike device type, used device features, version numbers, binaries, customized application, and sometimes sources should be available to fully understand and solve the problem at customer site.

A service provider acting globally has a large installed base and a quite limited number of experts, which are travelling around the globe. One challenge is to make all configuration information available during a service event. Another challenge is to identify equipment types and configurations world-wide which are affected by an update.

For a service event it is difficult to identify the installed configuration, in most cases the service engineer will call colleagues to ask them about the history and the current installation. Also binary and source files are required, therefore before the customer visit, the service engineer will try to collect the required fragments, but in most of the cases it is unknown where the information was stored. After several years, it is quite difficult to identify the engineer, who compiled the last configuration and thereof to get the files.

For a new update the installed base cannot be automatically identified. There is no central system in place, which outlines the current configuration. If a successor of a particular file, package, or configuration is developed, it is hard to determine which of the installed equipment is affected and requires this update.

Without an integrated IT-system (Information Technology) all relevant information needs to be collected manually: by engineers, account managers, domain responsible, end customers, and by lots of personal discussions and coordination is needed. This is time consuming and customers stay in a status of uncertainty.

What is already common today: CMDB (Configuration Management Database) as defined by Information Technology Infrastructure Library ITIL. The state of the art today is storing the current installed configuration from an installed base angle, which does not address the development angle.

Therefore it is an object of the invention to provide an optimized configuration update method of an installed base.

The problem is solved Configuration update method of the installed base with a Main-CMDB at a Service-Provider-Site,
- whereby the Main-CMDM includes all file versions, package-versions, configuration-versions and customized-configuration-versions for different customers entered by the service provider,
- whereby a Service-Engineer gets an Extract of the Main-CMDB for a specific customer, which Extract is stored in a Transport-Medium,
- whereby an Update-Tool is used to check a Customer-CMDB-Extract or the Main-CMDB, if a connection is possible, for possible updates for software,
- whereby the necessary updates are affected by using the Extract,
- whereby the executed updates are saved in the Customer-CMB-Extract or the Main-CMDB, if a connection is possible,
- whereby the customized configurations are stored in the Transport-Medium for entering to the Main-CMDB in case no direct connection is possible to the Main-CMDB.

In detail the problem is solved by a configuration update method of the installed base with a Main-CMDB at a Service-Provider-Site,
- whereby the Main-CMDB includes all file versions, package-versions, configuration-versions and Customized-Configuration-Versions for different customers entered by the service provider, or by external project engineers or system integrators,
- whereby each file version, package version and configuration version in the Main-CMDB has a link to its predecessor file version, package version or configuration version,
- whereby all Package-Developers, Project-Engineers or System-Integrators are automatically informed when a new file, package or configuration is entered in the Main-CMDB, that used the predecessor or that new file, package or configuration, so that they can build new packages or configurations themselves based on the new data in the Main-CMDB,
- whereby Service-Provider-Project-Engineers and Service-Provider-System-Integrators will be notified about new files, packages or configurations in the Main-CMDB that can be used to build new configurations, will build new configurations and add them to the Main-CMDB,
- whereby a Customer-Project-Engineer and a Customer-System-Integrator who do not have access to the Main-CMDB will be notified about new packages and configurations in the Main-CMDB and will be provided with an Extract of the Main-CMDB, will develop their customized Configurations, add them to the Customer-CMDB-Extract and will then synchronize their Customer-CMDB-Extract with the Main-CMDB with the help of a Transport-Medium, like a laptop,
- whereby a Service-Engineer gets an Extract or a replica of the Main-CMDB outlining particular installed equipment for a specific customer, which is stored in a Transport-Medium in case a direct communication to the Main-CMDB is not possible,
- whereby an Update-Tool is used to check the Customer-CMDB-Extract for a particular customer or the Main-CMDB, if a connection is possible, for possible updates for software,
- whereby the necessary updates are extracted from the Extract, or the Main-CMDB, if a connection is possible,
- whereby the information about the executed updates is saved in the Customer-CMDB-Extract, or in the Main-CMDB, if a connection is possible,
- whereby the customized configurations are stored in the Transport-Medium for entering to the Main-CMDB, or the executed updates are saved in the Main-CMDB directly, if a connection is possible.

It is an advantage that the proposed configuration update method of the installed base integrates development and service needs into one system with automatically gathering information from the field and requesting the history and the current valid configuration. Knowing the installed base and its configuration allows identification of affected devices if a patch is available. If an update is offered from one of the development teams, then the team could easily select which device type and feature is affected and where the equipment is installed. The customer with the installed equipment can be informed about a required and approved update to keep his equipment secure.

The technical area of the proposed configuration update method of the installed base is an IT infrastructure (Information Technology) and a method to make rapid identification of the installed configuration and availability of all required information regarding the installed device during a service event or after an update is available. The system manages configuration identification and update proposal automatically. Hereby easy installation and seamless updates is enabled.

Further advantages of the invention are mentioned in the dependent claims.

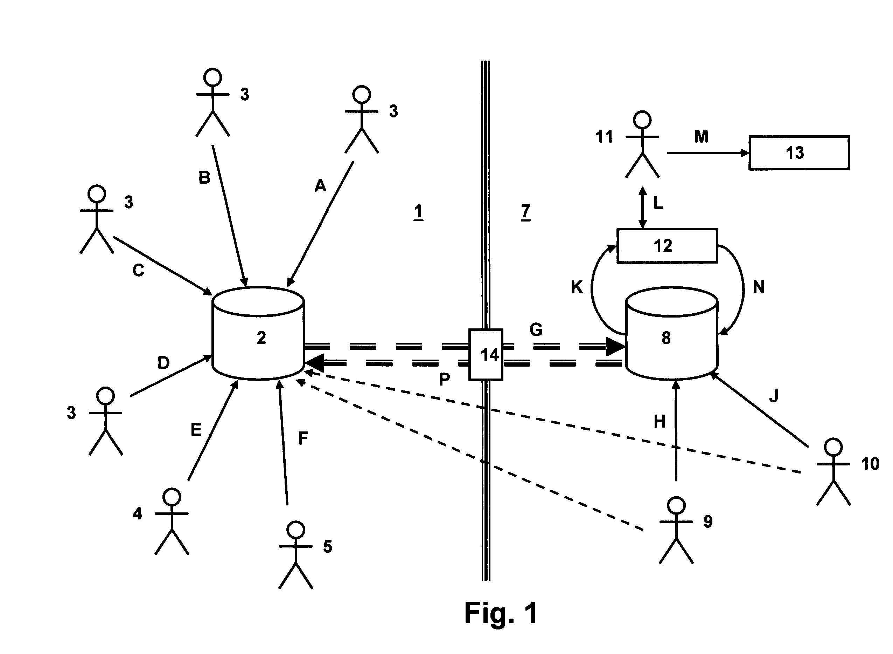

The invention will now be further explained by means of an exemplary embodiment and with reference to the accompanying drawing, in which Figure 1 shows an IT infrastructure with a Service-Provider-Site 1 (the service provider can be the manufacturing firm) with intranet or a secure access to a Main-CMDB 2 (Configuration Management Database) from the internet on the left side and a Customer-Site 7 of a specific customer on the right side without online connection to the Service-Provider-Site 1. The Main-CMDB 2 stands for the installed base and is supplied
- by several Package-Developers 3 entering New-Package-Versions A, B, C, D etc.
- by a Service-Provider-Project-Engineer 4 entering New-Customized-Configuration-Versions E for specific customers,
- by a Service-Provider-System-Integrator 5 entering New-Configuration-Versions F for specific application areas.

If a direct connection from the customer site to the Main-CMDB 2 is not possible a Service-Engineer 11 gets an Extract G of the Main-CMDB 2 before going to the Customer-Site 7 of a specific customer whereas this Extract G of the Main-CMDB 2 includes all software for the target systems of this specific customer (Customer-Site 7) as several target systems could be updated. A laptop computer can be a Transport-Medium 14 for this Extract G of the Main-CMDB 2.

The Service-Engineer 11 launches an update tool and creates a connection from the update tool to the target system to be updated. The Service-Engineer 11 also creates a connection from the update tool to either the Main-CMDB 2 in case an online connection is possible or to the Extract G of the Main-CMDB 2 that he brought along in a Transport -Medium 14. He uses the update tool to perform a process step K "Check for possible updates for the at least one given target system of the Customer-Site" that he has connected to the update tool, in the considered example of operation target system 13 of the Customer-Site 7 ― see process step L "Using the Update-Tool 12". Afterwards the process step M "Update the target system" affects the update of the target system 13. Subsequently using the Update-Tool 12 affects the next process step N "Save the latest target system configuration in the Customer-CMDB-Extract 8" after this update. Self-evident the process step M "Update the target system" has to be done for all the target systems 13 at Customer-Site 7. Before leaving Customer-Site 7 the Service-Engineer 11 saves the latest target system configuration for all target systems for the Main-CMDB 2 when returning back to the service provider, for instance the manufacturing firm, this means a last process step P "Update the customized configurations table with the latest configuration of target systems" and the Transport-Medium 14 is supplied correspondingly in order to ensure this important update of the Main-CMDB 2 and consequently of the installed base.

If installed equipment at Customer-Site 7 gets a problem, rapid assistance is required to determine the current configuration. As illustrated above the proposed "Configuration update method of the installed base" is based on a system for management of configurations used for creation and automatic selection of updates for target systems, clients, embedded systems, or customer controllers, which is able to handle the plurality of installed systems and their different customized configuration of the installed equipment.

In this connection the following key questions need to be answered:
- Which system type is located at the specific Customer-Site?
- What is the current valid configuration?
- How are the features look-alike which are used by the specific customer?
- What are the different versions of the installed configuration?
- Are sources available for the installed software?
- Who is responsible for this customer?
- How does the configuration history look like?
- What were the changes?
- Is there a new approved configuration available?
- Which system is affected by a new update?
- Is the specific customer using a feature which is affected by an update?

By using this proposed "Configuration update method of the installed base", if a Service-Engineer 11 is asking for assistance, then he directly gets feedback in the manner above described.

An alternative configuration update method of the installed base with the Main-CMDB 2 at the Service-Provider-Site 1 has the following features:
- the Main-CMDB 2 includes all file versions, package-versions, configuration-versions and Customized-Configuration-Versions for different customers entered by the service provider,
- the Service-Engineer 11 gets the Extract G of the Main-CMDB 2 for a specific customer, which Extract G is stored in the Transport-Medium 14,
- the Update-Tool 12 is used to check the Customer-CMDB-Extract 8 or the Main-CMDB 2, if a connection is possible, for possible updates for software,
- the necessary updates are affected by using the Extract G,
- the executed updates are saved in the Customer-CMDB-Extract 8, or in the Main-CMDB 2, if a connection is possible,
- the customized configurations are stored in the Transport-Medium 14 for entering to the Main-CMDB 2 in case no direct connection is possible to the Main-CMDB 2.

Supplementation: A Customer-Project-Engineer 9 who does not have access to the Main-CMDB 2 enters New-Customized-Configuration-Versions H for a specific customer to the Customer-CMDB-Extract 8 that will later be synchronized with the Main-CMDB 2. Further a Customer-System-Integrator 10 who does not have access to the Main-CMDB 2 enters New-Customized-Configuration-Versions J for a specific application area to a Customer-CMDB-Extract 8 that will later be synchronized with the Main-CMDB 2.

Further, each file version, package version and configuration version in the database has a link to its predecessor file version, package version or configuration version. All those Package developers, project engineers or system integrators are automatically informed when a new file, package or configuration is entered in the Main-CMDB 2, that used the predecessor of that new file, package or configuration, so that they can build new packages or configurations themselves based on the new data in the Main-CMDB 2,

### List of reference signs

- 1: Service-Provider-Site with intranet or secure access to the Main-CMDB 2 from the internet
- 2: Main-CMDB
- 3: Package-Developer
- 4: Service-Provider-Project-Engineer
- 5: Service-Provider-System-Integrator
- 6: ―
- 7: Customer-Site without online connection to the Service-Provider-Site 1
- 8: Customer-CMDB-Extract
- 9: Customer-Project-Engineer
- 10: Customer-System-Integrator
- 11 1: Service-Engineer
- 12: Update-Tool
- 13: Target system
- 14: Transport-Medium

- A: entering New-Platform-Package-Versions
- B: entering New-Simulink-Package-Versions
- C: entering New-Simulink-Package-Versions
- D: entering New-Simulink-Package-Versions
- E: entering New-Customized-Configuration-Versions for specific customers
- F: entering New-Configuration-Versions for specific application areas
- G: Extract of the Main-CMDB 2 for the target (specific) customer
- H: entering New-Customized-Configuration-Versions for a specific customer
- J: entering New-Customized-Configuration-Versions for a specific application area
- K: process step "Check for possible updates for a given target system 13 of the Customer-Site 7"
- L: process step "Using the PEC-Update-Tool 12"
- M: process step "Update the target system 13"
- N: process step "Save the latest Customer-Controller configuration in the Customer-CMDB-Extract 8"
- P: process step "Update the customized configurations table with the latest configuration of target system 13"

## Claims

1. Configuration update method of the installed base with a Main-CMDB (2) at a Service-Provider-Site (1),
• whereby the Main-CMDM (2) includes all file versions, package-versions, configuration-versions and customized-configuration-versions for different customers entered by the service provider,
• whereby a Service-Engineer (11) gets an Extract (G) of the Main-CMDB (2) for a specific customer, which Extract (G) is stored in a Transport-Medium (14),
• whereby an Update-Tool (12) is used to check a Customer-CMDB-Extract (8) or the Main-CMDB (2), if a connection is possible, for possible updates for software,
• whereby the necessary updates are affected by using the Extract (G),
• whereby the executed updates are saved in the Customer-CMB-Extract (8) or the Main-CMDB (2), if a connection is possible,
• whereby the customized configurations are stored in the Transport-Medium (14) for entering to the Main-CMDB (2) in case no direct connection is possible to the Main-CMDB (2).

2. Method according claim 1, **characterized in that** each Package-Developer (3) enters New-Versions of the package he is responsible for to the Main-CMDB (2).

3. Method according claim 1, **characterized in that** a Service-Provider-Project-Engineer (4) enters New-Customized-Configuration-Versions (E) to the Main-CMDB (2), by choosing the packages belonging to the New-Customized Configuration-Versions.

4. Method according claim 1, **characterized in that** a Service-Provider-System-Integrator (5) enters New-Configuration-Versions (F) to the Main-CMDB (2) by choosing the packages belonging to the New-Customized-Configuration-Versions.

5. Method according claim 1, **characterized in that** a Customer-Project-Engineer (9) who does not have access to the Main-CMDB (2) enters New-Customized-Configuration-Versions (H) for a specific customer to a Customer-CMDB-Extract that will later be synchronized with the Main-CMDB (2).

6. Method according claim 1, **characterized in that** a Customer-System-Integrator (10) who does not have access to the Main-CMDB (2) enters New-Customized-Configuration-Versions (J) for a specific application area to a Customer-CMDB-Extract that will later be synchronized with the Main-CMDB (2).
